# EUROPÄISCHE PATENTSCHRIFT

(11) **EP 0 549 932 B1**
(45) Veröffentlichungstag und Bekanntmachung des Hinweises auf die Patenterteilung: **09.04.1997**
(21) Anmeldenummer: 92121031.6
(22) Anmeldetag: 10.12.1992
(51) Int. Cl.: C04B 18/18, C04B 20/02, C04B 26/16, B09B 3/00, A62D 3/00

(54) **Als Baustoff verwendbares ökologisch unbedenkliches Entsorgungsprodukt aus Abfällen**
Ecologically sound disposable product containing waste, usable as building material
Produit disposable écologiquement neutre sur la base de déchets à utiliser comme matériau de construction

(30) Priorität: 20.12.1991 CH 3818/91
(43) Veröffentlichungstag der Anmeldung: 07.07.1993
(73) Patentinhaber: Jeney, Peter, CH-6300 Zug (CH); BALATON HOLDING SA, L-1660 Luxembourg (LU)
(72) Erfinder: Kremnitz, Harald, B-9700 Oudenaarde (AT)
(74) Vertreter: Blum, Rudolf Emil Ernst

(56) Entgegenhaltungen:
- EP-A- 0 402 306
- WO-A-90/14130
- DE-A- 3 427 502
- DE-A- 3 918 292
- GB-A- 506 409
- WPIL, Woche 7130, Derwent Publications Ltd., London (GB); AN 50220s

## Beschreibung

Die Erfindung betrifft ein als Baustoff verwendbares ökologisch unbedenkliches Entsorgungsprodukt aus Abfällen sowie ein Verfahren zu dessen Herstellung.

Aus der Fachliteratur sind viele Verfahren zur Entsorgung von Klärschlamm, Müll, Sondermüll und industriellen Abfällen bekannt. Die bisher verwendeten Verfahren sind aber grösstenteils mit mehr oder weniger grossen Nachteilen für die Umwelt behaftet.

So führt z.B. der Einsatz von Klärschlamm infolge seiner Hormonbelastung sowie seiner Belastung mit medikamentösen Restsubstanzen, Pestiziden, Kohlenwasserstoffen etc. bei der Verwendung als Weiden- resp. Wiesendünger z.B. zur teilweisen Sterilität von Kühen.

Bei der gängigen Verbrennung von Hausmüll entstehen neben Asche auch schädliche Abgase, die entweder in die Umgebung entweichen oder mittels einer Rauchgasreinigungsanlage aufgefangen werden. Bei einer allfälligen Rauchgasreinigung fallen jedoch abermals schwer zu entsorgende Abfälle an.

Die meisten bekannten Verfahren sind nur Teillösungen und zielen darauf ab, die Abfallmenge zu verkleinern, wobei allerdings die Schadstoffbelastung in den verbleibenden Restmengen gewöhnlich um ein Vielfaches ansteigt.

EP 0 402 306 offenbart ein Verfahren zur Immobilisierung von in einem flüssigen oder halbflüssigen organischen Gemisch als Verunreinigung enthaltenen gefährlichen Stoffen durch Zugabe eines zementartigen Materials sowie Substanzen, die dessen Hydratation, Abbindeverhalten und Permeabilität beeinflussen.

Es wurden auch bereits Versuche unternommen, spezielle Abfälle in wiederverwendbares Material überzuführen. Solche werden z.B. in DE 34 67 502 und WO 90/14130 beschrieben.

Die deutsche Offenlegungsschrift DE 34 27 502 offenbart ein Verfahren zur Herstellung eines feuerwiderstandsfähigen Bauteils durch Verpressen von Spanmaterial mit pulverförmigen Feuerwiderstandsfähigkeit verleihenden Substanzen, die nicht hydraulische Bindemittel sind, sowie entsprechend hergestellte Bauteile.

WO 90/14130 offenbart einen mit einem Füllmittel gefüllten Kunststoff, in dem toxische Stoffe in Kunstharz derart gebunden sind, dass das erhaltene Produkt nicht mehr toxisch ist. Das Kunstharz ist das Reaktionsprodukt einer Mehrkomponenten-Kunstharzmasse mit einer Komponente mit stickstoffhaltiger Reaktionsgruppe, insbesondere NCO und einer Mehrkomponenten-Kunstharzmasse mit einer Komponente mit einer Sauerstoff-Wasserstoff-Komponente (OH-Gruppe).

Wie der obengenannte Stand der Technik zeigt, kann sinnvoll wiederverwendbares Material gewöhnlich nur bei materialspezifischer Sammlung sowie unter hohem Energieaufwand gewonnen werden (z.B. Glas- und Aluminiumrecycling). Die Ueberführung von unsortiertem Abfall in eine wiederverwendbare, ökologisch unbedenkliche Form ohne Kreation von neuerlich schwerentsorgbaren Rückständen ist deshalb sehr wünschenswert.

Die vorliegende Erfindung gibt eine Lösung für die Wiederverwendung von Abfall, indem dieser in ein z.B. als Baustoff verwendbares ökologisch unbedenkliches Entsorgungsprodukt aus Abfällen übergeführt wird, welches 30-80 Gew.-% organisches Material enthält und eine Brandbeständigkeit von über 65 Minuten aufweist (DIN 4102).

Das erfindungsgemässe Entsorgungsprodukt findet sehr vielfältige Verwendungsmöglichkeiten, entweder allein oder als Laminat mit anderen Werkstoffen, beispielsweise im Hoch- und Tiefbau, im Wasser- und Drainagebau, im Garten- und Landschaftsbau und im Sportanlagebau. Die Entsorgungsprodukte können z.B. als Filter- und Substratmaterial im Strassen- und Sportanlagebau, als Wärme- und Schallisolationen und wasserfeste Kanalisolation, Vollverbundziegel, Drainageplatten, Baumaterial für Innen- und Aussenwände, Füllisolierung, Gussestrich, Brandschutzplatten, Aussen- und Innenverputz und vieles mehr eingesetzt werden.

Trotz einer hohen Schadstoffbelastung der Ausgangsmaterialien (Abfälle) sind die erfindungsgemässen Entsorgungsprodukte ökologisch völlig unbedenklich, da organische Schadstoffe darin entweder gebunden oder in eine unschädliche Form übergeführt vorliegen und Schwermetalle nahezu vollständig immobilisiert sind, so dass aus den erfindungsgemässen Produkten bei gängigen Verfahren (ELUAT-TEST-INERTSTOFFE gemäss TVA vom 10. Dezember 1990) weniger Schwermetalle extrahiert werden als bei herkömmlichen, aus "sauberen" Ausgangsmaterialien hergestellten Baustoffen.

Die Vorteile der erfindungsgemässen Entsorgungsprodukte sind deshalb nicht nur ihre durch die Zusammensetzung und Struktur bedingten Eigenschaften, die sie zu wertvollen Baustoffen für viele Anwendungen machen, sondern auch die ökologisch unbedenkliche Entsorgung. Die erfindungsgemässen Entsorgungsprodukte gestatten es auch, dass in Sondermülldeponien zu lagernde Abfälle nach ihrer Wiederverwendung in erfindungsgemässen Entsorgungsprodukten in normalen Mülldeponien gelagert werden können, respektive mittels des ebenfalls Gegenstand dieser Erfindung bildenden Verfahrens abermals in neuwertige Baustoffe umgewandelt werden können.

Wie bereits erwähnt ist ein weiterer Gegenstand der Erfindung, ein Verfahren für die Herstellung der erfindungsgemässen Entsorgungsprodukte aus Abfällen.

Die als Ausgangsstoffe einsetzbaren Arten von Abfällen sind sehr vielfältig. Ueblicherweise werden Klärschlamm, Flotationsrückstände, Hausmüll, Verpackungsabfälle, kontaminierte Böden, industrielle Filterrückstände, Bauschutt, Restchemikalien, Jauche und andere landwirtschaftliche Abfälle verwendet, wobei das Verfahren nicht auf diese Ausgangsstoffe beschränkt ist. Die zu entsorgenden Abfälle werden in der Folge als Sekundärrohstoffe bezeichnet.

Diesen Ausgangsstoffen werden während des Verarbeitungsprozesses Zusatzstoffe beigegeben. Diese Zusatzstoffe werden in zwei Gruppen unterteilt, die Trägerstoffe oder Basischemikalien und die Steuerchemikalien oder Primärstoffe.

Als Zusatzstoffe können ebenfalls spezielle Abfälle verwendet werden, so dass die Menge an reinen Chemikalien resp. Materialien stark reduziert werden kann, üblicherweise auf ca. 7 Gew.-%, bezogen auf die Sekundärrohstoffmenge. Durch die Verminderung der reinen, zuzukaufenden Materialien verbilligt sich das Entsorgungsprodukt abermals.

Es ist selbstverständlich, dass sogar ausschliesslich mit Abfallstoffen gearbeitet werden kann, sofern durch diese ausreichende Mengen an Zusatzstoffen bereitgestellt werden können.

Als Quellen für Zusatzstoffe eignen sich neben reinen Chemikalien auch Abfälle: beispielsweise von Frostschutzmitteln (Glykolen), aus der Alkoholherstellung, von Oelen, von Oelderivaten, aus Raffinerien (speziell Polyole und Harnstoffe), von Polyol-Wasser-Mischungen, z.B. aus der Farbenherstellung, von gewissen Ester-Zusammensetzungen, Polyurethanen, Isocyanaten und Eisensalzen.

Es können auch Halogenkohlenwasserstoffe resp. deren Nebenprodukte eingesetzt werden, beispielsweise Fluor-Chlor-Kohlenwasserstoffe, wie sie unter den Handelsnamen "Freon" bekannt sind.

Beim Einsatz halogenhaltiger Stoffe (Freone, Dioxine, PCB etc.) kann direkt vor der Reaktionsstufe I eine Strahlenbehandlung, beispielsweise mit ¹³⁷Cs oder bevorzugt mit ⁶⁰Co vorgenommen werden. Durch die von diesen Radioisotopen emittierte γ-Strahlung werden die Halogene mindestens teilweise aus den organischen Stoffen eliminiert. Diese vorgeschaltete Reaktion kann sich günstig auf die Reaktion in Stufe I auswirken.

Es ist vorteilhaft, wenn die Abfälle bereits bei ihrer Anlieferung analysiert und der Analyse entsprechend in verschiedenen Boxen und Behältern gelagert werden.

Bei dieser Analyse werden neben Metallen (gemäss TVA vom 10. Dezember 1991) auch der organische Anteil enthaltend Kohlenwasserstoffe, und eventuell Dioxine, Formaldehyd und ähnliches erfasst. Bei hohen Metallgehalten kann eine vorgeschaltete Metallrückgewinnung vorteilhaft sein, z.B. über Hydrometallurgie.

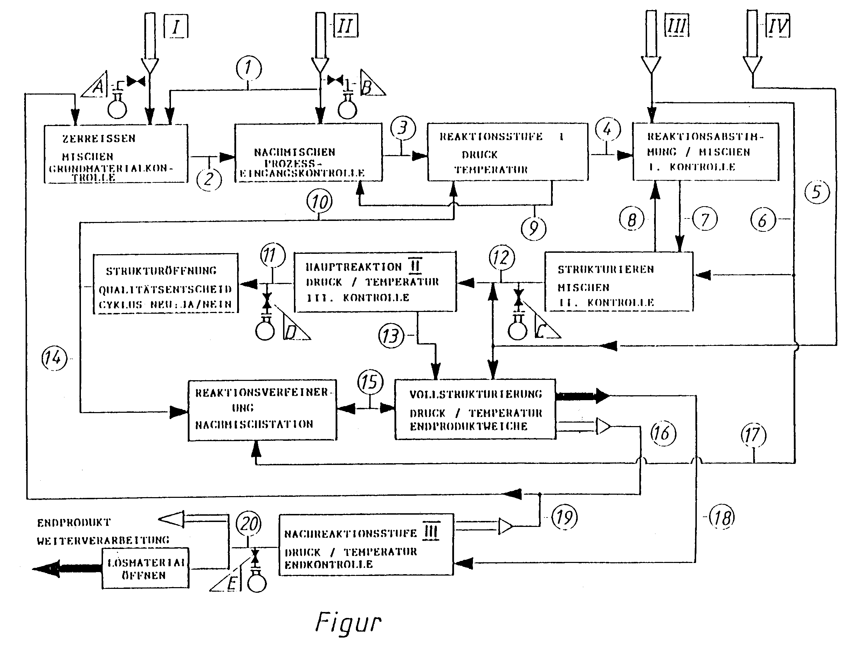

Die Verarbeitung der Abfälle erfolgt bevorzugt nach dem in der Figur dargestellten Verfahren, in welchem
- I.: Zu entsorgende Stoffe (Abfälle, Sekundärrohstoffe)
- II.: Trägerstoffe (Basischemikalien)
- III.: Steuerchemikalien (Primärstoffe)
- IV.: Polyole
- A - E: Analytische Prüfungen
- 1 - 7: Aggregatverbindungsleitungen in Prozessablaufrichtung
- 8 - 10: Rückführungsleitungen
- 11 - 14: Aggregatverbindungsleitungen
- 15: Reaktionsweiche
- 16 - 18: Transportweg in Prozessablaufrichtung
- 19: Rückführungsleitung
- 20: Transportweg zur Weiterbearbeitung (mechanisch)
bedeuten.

Diese vorsortierten Materialien I können dann aufgrund der Rezeptur für das gewünschte Endprodukt und der vorgängigen Analyse in den Anlagenbereich transportiert und falls erforderlich, zerkleinert und miteinander vermischt werden. Nach erfolgter Vermengung der zu verarbeitenden Sekundärrohstoffe gelangen selbige in einen Nachmischbehälter, in dem die ersten Basischemikalien II sowie das Isocyanat zugemischt werden.

Das Isocyanat ist ein sehr wichtiger Bestandteil, da es mit vorhandenen, unerwünschten Stoffen wie Harnsäure, Ammoniak, Hormonen (aus Klärschlamm und Jauche) sowie Resten von organischen und pharmazeutischen Substanzen reagiert, so dass diese anschliessend gebunden oder in unschädliche Verbindungen übergeführt vorliegen. Ausserdem sind diese Reaktionsprodukte, sowie das später gebildete Reaktionsprodukt zwischen noch nicht reagiertem Isocyanat und Polyolen, ein wichtiger Bestandteil der gewünschten Kunststoffstruktur, welche die hervorragenden Eigenschaften des Endprodukts ausmacht.

Es ist deshalb notwendig, dass Isocyanate in der Ausgangsmischung in einer Gesamtmenge von bis zu 0,3 Volumen % vorhanden sind. Weitere Stoffe, die der Sekundärrohstoffmischung vorgängig zur ersten Reaktionsstufe je nach Analyse zugegeben werden können, resp. müssen, sind: Kalk, Zement, Gips, Bentonit, Tonschiefer, Schlacke aus Verbrennungsanlagen, Mutterboden, Sand und Schlämme verschiedener Art, Stroh, Schilf und Rinde, wobei der Zusatz von Kalk, bevorzugt eine Mischung aus gebranntem und ungebranntem Kalk, notwendig ist.

In einer ersten Reaktionsstufe (Reaktionsstufe I) wird ein Gemenge, welches mindestens einige der obengenannten Stoffe enthält, bei einem pH-Wert von ca. 12 und bei Temperaturen zwischen 80 und 100°C und einem Druck von 50 bis 150 bar während mindestens 1-15 Minuten zur Reaktion gebracht. In diesem Reaktionsschritt wird eine verfestigte Struktur gebildet, welche kristalline Bereiche aufweist (= Vorhygienisierungs- und Neutralisationsstufe).

In den nachfolgenden Verfahrensstufen kommt es zu einer Korrektur der Reaktionsmischung durch einen zweistufigen Zusatz von Steuerchemikalien.

In einer ersten Stufe werden als Steuerchemikalien III Eisen(II)- und Eisen(III)-Salze und, falls notwendig, Aluminiumhydroxid, Borsäure, Natriumtetraborat, Salzsäure, Essigsäure, Alkohol, Natronlauge, Cellulose, Enzyme, Schwefel (bevorzugt Raffinerieschwefel = verunreinigter Elementarschwefel) Humussäure sowie luftporenbildende Zusätze zugegeben. In dieser Stufe kann allenfalls eine Nachdosierung von Isocyanaten stattfinden. Nachdem diese Zusätze mit dem Produkt aus der ersten Reaktionsstufe vermischt worden sind, werden separat Polyole (N) zugegeben, welche mit Fettsäuren, pflanzlichen und/oder tierischen Oelen und/oder Mineralölen, Kohlenwasserstoffen sowie Isocyanaten reagieren. Durch die exotherme Reaktion des bisher unreagierten Isocyanats mit den Polyolen steigt die Temperatur auf ca. 100-150°C. Hierbei wird eine faserbindende Vorstrukturierung erzielt. Die Hauptreaktion II wird im allgemeinen bei dieser Temperatur und einem Druck zwischen 100 und 250 bar und neutralem pH-Wert durchgeführt, wobei die hochviskose Suspension in eine vorgeformte Pressmasse umgewandelt wird.

Nach dieser Umwandlung erfolgt im Rahmen einer Prüfung die Kontrolle der Beschaffenheit der Pressmasse. masse. Dabei wird eine Probe strukturell geöffnet, d.h. zerkleinert und zerhackt. Erfüllt diese Probe die Anforderungen nicht, so wird das Produkt der Hauptreaktion II gesamthaft strukturell geöffnet und entweder der Reaktionsverfeinerung oder der Reaktionsstufe I zugeführt. Ist das Ergebnis der Prüfung positiv, so wird das Produkt der Vollstrukturierung zugeführt.

Im Vollstrukturierungsprozess wird bei erhöhter Temperatur (150 bis 250 °C) und erhöhtem Druck (150 bis 350 bar) die gewünschte verfestigte Struktur erzielt.

Es hat sich gezeigt, dass das Produkt gelegentlich schon nach der Hauptreaktion II die gewünschten Eigenschaften aufweist. Die Vollstrukturierung kann in diesen Fällen ausgelassen werden.

Bereits bei der Reaktionsstufe I setzt eine Hygienisierung ein, die meist nach der Reaktionsstufe II vollständig ist. Zur Sicherheit wird allerdings nach der Vollstrukturierung noch eine Nachreaktionsstufe III nachgeschaltet, in der die Produkte unter Ausnutzung der restlichen Reaktionstemperatur und unter geringem Ueberdruck zwischengelagert werden.

Die anschliessende Endkontrolle entscheidet, ob die Produkte der Weiterverarbeitung zugeführt werden oder als Sekundärrohstoffe den Prozess abermals durchlaufen.

Die Mengenbereiche (gesamthaft), in denen üblicherweise gearbeitet wird, sind folgende:

| Sekundärstoffe | |
|---|---|
| Karton, Styropor, Plaste | 0 - 20 Vol.-% |
| Klärschlamm (TS 25 %) ¹ | 0 - 40 Vol.-% |
| Schlacke, Filterstaub, Flugasche | 0 - 30 Vol.-% |
| Hausmüll | 0 - 50 Vol.-% |
| Total | mind. 20 Vol.-% |
| weitere Abfallstoffe | max. 60 Vol.-% |
| Gehalt an kritischen | 1 - 50 g/kg |
| Metallen | |
| organischer Anteil | ca. 30 - 95 Vol.-% |

| Zusatzstoffe: | |
|---|---|
| Isocyanat | 0.2 - 0.7 Vol.-% |
| Basischemikalien | 2 -10 Vol.-% |
| Steuerchemikalien | 0.2 - 1.1 Vol.-% |
| Polyole | 2 - 7 Vol.-% |

| | |
|---|---|
| ¹ TS = Trockensubstanz | |

Technologisch ist das Verfahren so ausgelegt, dass jede Prozessstufe nach Bedarf angesteuert werden kann (vgl. Figur). Es hat sich auch gezeigt, dass ein Einstufenverfahren mit entsprechend verlängerten Reaktionszeiten sowie angepassten Druck- und Temperaturbedingungen zu durchaus brauchbaren Produkten führt. Im Einstufenverfahren werden oft Temperaturen bis 350°C erreicht.

Sowohl das mehrstufige als auch das einstufige Verfahren haben den Vorteil, dass trotz hoher Temperaturen keine Geruchsbelästigung, z.B. durch entweichenden Ammoniak festzustellen ist.

Durch Variation der Zusatzstoffe, der Temperatur und des Drucks lassen sich ausserdem die Eigenschaften der erfindungsgemässen Baustoffe auf die Erfordernisse ihres jeweiligen Verwendungszwecks einstellen resp. optimieren, z.B. führt die Verringerung des Drucks zu einem stärkeren Aufquellen der Struktur und somit zu einem elastischen Produkt.

Im fertigen Produkt sind Schwermetalle und organische Schadstoffe wie Dioxine und Formaldehyd mit gängigen Testverfahren nur noch in Mengen unterhalb der Grenzwerte, falls überhaupt, nachweisbar.

Das nachfolgende Beispiel soll das Verfahren näher erläutern:

### Beispiel eines Herstellungsverfahrens für eine Brandschutzplatte

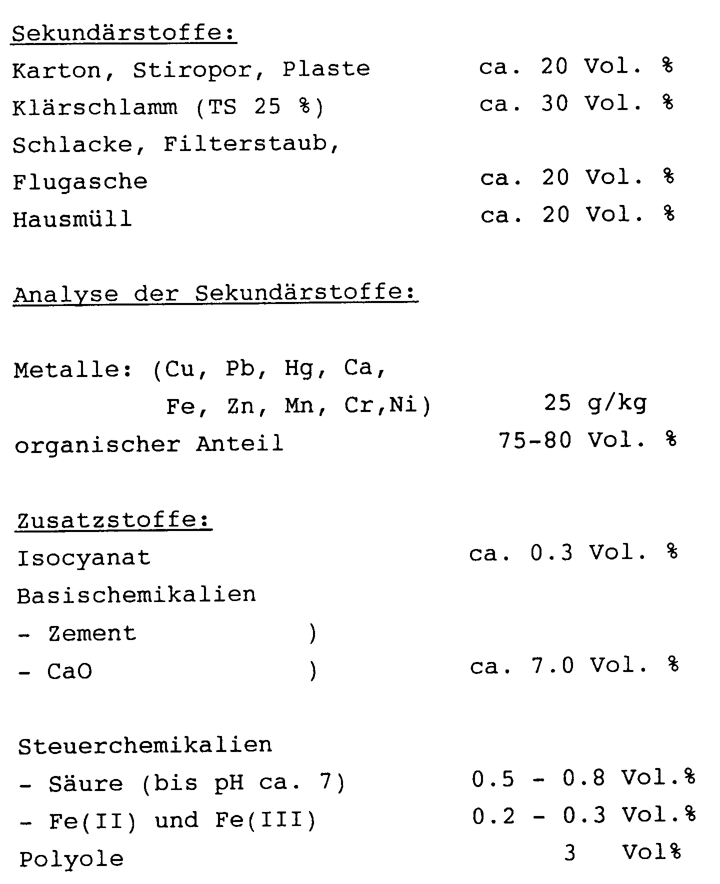

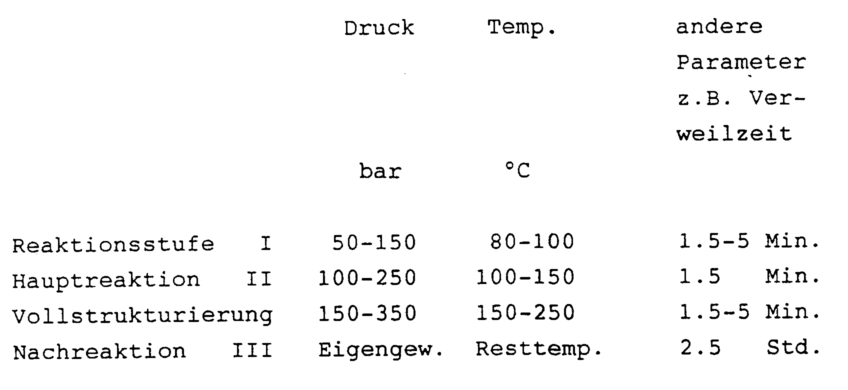

Die 2.5 Std. der Nachreaktion geben die Sicherheit, dass das Produkt Seuchenhygienisch unbedenklich gemäss Merkblatt M7 des BRD Bundesgesetzes ist. Es hat sich gezeigt, dass die Parameter im angegebenen Rahmen variieren können, ohne dass das Endprodukt nachteilig verändert wird.

## Patentansprüche

1. Als Baustoff verwendbares ökologisch unbedenkliches Entsorgungsprodukt aus Abfällen, dadurch gekennzeichnet, dass es herstellbar ist durch Vermischen von Abfällen mit Isocyanaten, Kalk, Eisen(II)- und Eisen (III)-Salzen sowie Polyolen oder diese enthaltenden Materialien, die gegebenenfalls ebenfalls Abfälle sein können, und zur Reaktion bringen dieser Mischung bei Temperaturen bis 350°C und Drücken bis 350 bar und dass es von 30 bis 80 Gew.-% organisches Material enthält und eine Brandbeständigkeit, bestimmt nach DIN 4102 vom Mai 1981, bis über 65 Minuten aufweist.

2. Entsorgungsprodukt nach Anspruch 1, dadurch gekennzeichnet, dass es Schwermetalle in einer solchen Form enthält, dass sie bei ELUAT TESTS gemäss TVA vom 10. Dezember 1990 in Mengen unter und in den Grenzen von Inertstoffen sind.

3. Entsorgungsprodukt nach Anspruch 1 oder 2, dadurch gekennzeichnet, dass es ein Laminat aus oder mit einem anderen Entsorgungsprodukt oder mit neuem Material ist.

4. Verfahren zur Herstellung des Entsorgungsproduktes nach Anspruch 1 oder 2 durch Druck- und Temperaturbehandlung, dadurch gekennzeichnet, dass Abfälle mit Isocyanaten, Kalk, Eisen(II)- und Eisen (III)-Salzen sowie Polyolen oder diese enthaltende Materialien, die gegebenenfalls ebenfalls Abfälle sein können, vermischt und bei Temperaturen bis 350 °C und Drücken bis 350 bar zur Reaktion gebracht werden.

5. Verfahren nach Anspruch 4, dadurch gekennzeichnet, dass ausserdem Trägerstoffe und Steuerchemikalien zugegeben werden.

6. Verfahren nach Anspruch 4 oder 5, dadurch gekennzeichnet, dass die Reaktion in folgende Reaktionsstufen unterteilt durchgeführt wird:
a) die Abfälle werden mit Isocyanaten, Kalk und gegebenenfalls weiteren Trägerstoffen vermischt und bei Temperaturen zwischen 80 und 100 °C und Drücken zwischen 50 und 150 bar zur Reaktion gebracht, worauf
b) das Produkt aus Stufe a) mit Fe(II)- und Fe(III)-Salzen sowie gegebenenfalls mit einer oder mehreren weiteren Steuerchemikalien vermischt wird, wonach Polyole zugegeben werden und die Mischung bei Temperaturen von 100 bis 150 °C und Drücken von 100 bis 250 bar vorstrukturiert und
c) das vorstrukturierte Produkt aus Stufe b) bei Temperaturen zwischen 150 und 250 °C und Drücken zwischen 150 und 350 bar zur Endfestigkeit gebracht wird.

7. Verfahren nach Anspruch 5 oder 6, dadurch gekennzeichnet, dass die Trägerstoffe ausgewählt sind aus der Gruppe umfassend Zement, Gips, Bentonite, Tonschiefer, Schlacke aus Verbrennungsanlagen, Mutterboden, Sand, Schlämmen verschiedener Art, Stroh, Schilf und Rinde.

8. Verfahren nach einem der Ansprüche 5 bis 7, dadurch gekennzeichnet, dass die Steuerchemikalien ausgewählt sind aus der Gruppe umfassend Aluminiumhydroxid, Borsäure, Natriumtetraborat, Salzsäure, Alkohol, Essigsäure, Natronlauge, Enzymen, Cellulose, Schwefel, Humussäure, luftporenbildenden Zusätzen und Isocyanaten.

9. Verfahren nach einem der Ansprüche 4 bis 8, dadurch gekennzeichnet, dass halogen-, insbesondere chlorhaltige Abfälle vor der Reaktionsstufe I einer Bestrahlung mit Gamma-Strahlen ausgesetzt werden, bevorzugt einer Bestrahlung mit ⁶⁰Co.

10. Verfahren nach einem der Ansprüche 4-9, dadurch gekennzeichnet, dass es so ausgelegt ist, dass das Produkt an mindestens einer Stelle des Verfahrens analysiert wird und dass das Produkt in eine beliebige, bereits durchlaufene Stufe zurück- oder in eine beliebige noch nicht durchlaufene Stufe weitergeführt werden kann.

11. Verwendung des Entsorgungsproduktes nach einem der Ansprüche 1 bis 3 als Bau- und Werkstoff.

12. Verwendung nach Anspruch 11 als Filter- und Substratmaterial im Strassen- und Sportanlagenbau, als Wärme- und/ oder Schall-Isolation und wasserfeste Kanalisolation, Vollverbundziegel, Drainageplatten, Baumaterial für Innen- und Aussenwände, Füllisolierung, Gussestrich und Brandschutzplatten, Aussen- oder Innenverputz.

## Claims

1. Ecologically harmless waste disposal product consisting of refuse which can be used as a building material, characterised in that it can be produced by mixing refuse with isocyanates, lime, iron (II) and iron (III) salts and polyols or materials containing them which can optionally also be refuse, and by causing this mixture to react at temperatures of up to 350°C and pressures of up to 350 bar and in that it contains from 30 to 80% by weight of organic material and has fire-resistance, according to DIN 4102 of May 1981, exceeding 65 minutes.

2. Waste disposal product according to claim 1, characterised in that it contains heavy metals in such a form that they are in quantities below and within the limits of inert materials during eluate tests according to TVA of 10th December 1990.

3. Waste disposal product according to claim 1 or 2, characterised in that it is a laminate of or with a further waste disposal product or with new material.

4. Process for producing the waste disposal product according to claim 1 or 2 by pressure and temperature treatment, characterised in that refuse is mixed with isocyanates, lime, iron (II) and iron (III) salts and polyols or materials containing them which can optionally also be refuse, and is caused to react at temperatures of up to 350°C and pressures of up to 350 bar.

5. Process according to claim 4, characterised in that carriers and control chemicals are also added.

6. Process according to claim 4 or 5, characterised in that the reaction is divided into the following reaction steps:
a) the refuse is mixed with isocyanates, lime and optionally other carriers and is caused to react at temperatures between 80 and 100°C and pressures between 50 and 150 bar, whereupon
b) the product from step a) is mixed with Fe(II) and Fe(III) salts and optionally with one or more other control chemicals, whereupon polyols are added and the mixture is pre-structured at temperatures of 100 to 150°C and pressures of 100 to 250 bar and
c) the pre-structured product from step b) is brought to final strength at temperatures between 150 and 250°C and pressures between 150 and 350 bar.

7. Process according to claim 5 or 6, characterised in that the carriers are selected from the group comprising cement, gypsum, bentonite, argillaceous slate, combustion plant slag, top soil, sand, various types of sludge, straw, reeds and bark.

8. Process according to one of claims 5 to 7, characterised in that the control chemicals are selected from the group comprising aluminium hydroxide, boric acid, sodium tetraborate, hydrochloric acid, alcohol, acetic acid, sodium hydroxide solution, enzymes, cellulose, sulphur, humic acid, pore-forming additives and isocyanates.

9. Process according to one of claims 4 to 8, characterised in that halogen-, in particular chlorine-containing refuse is exposed to irradiation with gamma rays, preferably irradiation with ⁶⁰Co, prior to reaction step I.

10. Process according to one of claims 4 to 9, characterised in that it is designed such that the product is analysed in at least one stage of the process and that the product can be returned to an optional, already passed stage or into an optional not yet passed stage.

11. Use of the waste disposal product according to one of claims 1 to 3 as building material and substance.

12. Use according to claim 11 as filter and substrate material in the construction of roads and sports' complexes, as heat and/or sound insulation and watertight canal insulation, solid composite bricks, drainage panels, building material for internal and external walls, padding insulation, coatings and fireproof panels, external or internal plastering.

## Revendications

1. Produit d'élimination obtenu à partir de déchets, sans danger pour l'environnement et utilisable comme matériau de construction, caractérisé en ce qu'il peut être fabriqué par mélange de déchets avec des isocyanates, de la chaux, des sels de fer(II) et des sels de fer(III) ainsi que des polyols ou des matériaux les contenant qui peuvent éventuellement être des déchets également et réaction de ce mélange à des températures jusqu'à 350°C et des pressions jusqu'à 350 bars et en ce qu'il contient 30 à 80 % en poids de matière organique et possède une résistance au feu, déterminée selon DIN 4102 de mai 1981, jusqu'à plus de 65 minutes.

2. Produit d'élimination selon la revendication 1, caractérisé en ce qu'il contient des métaux lourds sous une forme telle que, dans les TESTS D'ELUATS selon TVA du 10 décembre 1990, ils sont présents dans des quantités inférieures et dans les limites des substances inertes.

3. Produit d'élimination selon la revendication 1 ou la revendication 2, caractérisé en ce qu'il s'agit d'un stratifié à partir de ou avec un autre produit d'élimination ou avec un nouveau matériau.

4. Procédé de fabrication du produit d'élimination selon la revendication 1 ou la revendication 2 par un traitement sous pression et température, caractérisé en ce que des déchets sont mélangés avec des isocyanates, de la chaux, des sels de fer(II) et des sels de fer(III) ainsi que des polyols ou des matériaux les contenant qui peuvent également être des déchets et sont amenés à réagir à des températures jusqu'à 350°C et des pressions jusqu'à 350 bars.

5. Procédé selon la revendication 4, caractérisé en ce que des substances de support et produits chimiques régulateurs sont ajoutés également.

6. Procédé selon la revendication 4 ou la revendication 5, caractérisé en ce que la réaction est subdivisée en les étapes réactionnelles suivantes:
a) les déchets sont mélangés avec des isocyanates, de la chaux et, éventuellement, d'autres substances de support et amenés à réagir à des températures entre 80 et 100°C et des pressions entre 50 et 150 bars, puis
b) le produit de l'étape a) est mélangé avec des sels de Fe(II) et des sels de Fe(III) ainsi qu'éventuellement avec un ou plusieurs autres produits chimiques régulateurs, ensuite des polyols sont ajoutés et le mélange est préstructuré à des températures de 100 à 150°C et des pressions de 100 à 250 bars et
c) le produit préstructuré de l'étape b) est amené à sa solidité finale à des températures entre 150 et 250°C et à des pressions entre 150 et 350 bars.

7. Procédé selon la revendication 5 ou la revendication 6, caractérisé en ce que les substances de support sont sélectionnées à partir du groupe composé du ciment, du plâtre, de la bentonite, du schiste argileux, des scories d'installations d'incinération, de la terre arable, du sable, des bornes de diverses natures, de la paille, des joncs et des écorces.

8. Procédé selon l'une quelconque des revendications 5 à 7, caractérisé en ce que les produits chimiques régulateurs sont sélectionnés à partir du groupe composé de l'hydroxyde d'aluminium, de l'acide borique, du tétraborate de sodium, de l'acide chlorhydrique, d'un alcool, de l'acide acétique, de la soude caustique, d'enzymes, de la cellulose, du soufre, d'acide ulmique, d'additifs aérateurs et d'isocyanates.

9. Procédé selon l'une quelconque des revendications 4 à 8, caractérisé en ce que des déchets halogénés et, en particulier, chlorés, sont exposés avant l'étape réactionnelle I à une exposition aux rayons gamma, de préférence à une exposition à du ⁶⁰CO.

10. Procédé selon l'une quelconque des revendications 4 à 9, caractérisé en ce qu'il est conçu de telle manière que le produit soit analysé à au moins un stade du procédé et que le produit puisse être recyclé dans une quelconque phase déjà traversée ou transféré dans une phase restant à traverser.

11. Utilisation du produit d'élimination selon l'une quelconque des revendications 1 à 3 comme matériau de construction ou matière première.

12. Utilisation selon la revendication 11 comme matériau filtrant et de support dans la construction de routes et d'installations sportives, comme isolation thermique et/ou phonique, comme isolation hydrofuge de canaux, briques composites, plaques de drainage, matériau de construction pour les murs externes et internes, isolation de remplissage, barres coulées et plaques de protection contre l'incendie et revêtement externe ou interne.
